# EUROPEAN PATENT APPLICATION

(11) **EP 3 929 434 A1**
(43) Date of publication of application: **29.12.2021**
(21) Application number: 20182502.3
(22) Date of filing: 26.06.2020
(51) Int. Cl.: F03D 80/00, G01P 5/14

(54) **ASSEMBLY AND METHOD FOR MONITORING AIR FLOW AT A SURFACE OF A ROTOR BLADE OF A WIND TURBINE**

(71) Applicant: Siemens Gamesa Renewable Energy A/S, 7330 Brande (DK)
(72) Inventor: Enevoldsen, Peder Bay, 7100 Vejle (DK); Ramanujam, Giridhar, 7330 Brande (DK)
(74) Representative: Aspacher, Karl-Georg

(57) **Abstract**

An assembly for monitoring air flow at a surface of a rotor blade of a wind turbine is described. The assembly comprises (a) a surface module adapted to be arranged at a predetermined location of the rotor blade surface, the surface module comprising two air inlets facing opposite directions along an axis, (b) a sensor module comprising two pressure sensors, wherein one of the two pressure sensors is in fluidic communication with one of the two air inlets and the other one of the two pressure sensors is in fluidic communication with the other one of the two air inlets, wherein the sensor module is adapted to output two pressure signals indicative of the pressures sensed by the two pressure sensors, and (c) a processing unit adapted to determine at least one of a flow direction and a flow speed along the axis based on the two pressure signals. Furthermore, a wind turbine and a method are described.

## Description

### Field of Invention

The present invention relates to the field of wind turbines, in particular to monitoring of air flow at a surface of a rotor blade of a wind turbine.

### Art Background

Regulating the performance of wind turbines depends highly on being able to accurately and reliably predict the aerodynamic behavior of the wind turbine blade under varying operating conditions experienced by the wind turbine blade. One of the key features of the flow over the wind turbine blade is the occurrence of stall and the direction of flow on the blade surface. Identifying and quantifying these flow features could help understand and regulate the performance of wind turbine blades with higher precision and reduce the design safety factors associated with inaccuracy and uncertainty of simulation methods in predicting such flow behavior on wind turbine blades. Hence, there may be a need for identifying these flow features by means of a simple and reliable device to thereby help improve turbine performance by influencing the control parameters of the turbine such as pitch angle, rotor speed, yaw position, etc. for any given inflow condition.

### Summary of the Invention

This need may be met by the subject matter according to the independent claims. Advantageous embodiments of the present invention are described by the dependent claims.

According to a first aspect of the invention, there is provided an assembly for monitoring air flow at a surface of a rotor blade of a wind turbine, the assembly comprising (a) a surface module adapted to be arranged at a predetermined location on the rotor blade surface, the surface module comprising two air inlets facing opposite directions along an axis, (b) a sensor module comprising two pressure sensors, wherein one of the two pressure sensors is in fluidic communication with one of the two air inlets and the other one of the two pressure sensors is in fluidic communication with the other one of the two air inlets, wherein the sensor module is adapted to output two pressure signals indicative of the pressures sensed by the two pressure sensors, and (c) a processing unit adapted to determine at least one of a flow direction and a flow speed along the axis based on the two pressure signals.

This aspect of the invention is based on the idea that total pressure measurements through air inlets pointing in opposite directions at the blade surface allows determination of flow direction and flow speed along an axis corresponding to the orientation of the air inlets.

In the present context, the term "two air inlets facing opposite directions along an axis" may in particular denote that the two air inlets are aligned (on the axis) and facing diametrically opposed directions, i.e. directions having an angle of 180° between them.

In the present context, the term "flow direction" may in particular denote an indication of whether the flow is directed in one of two possible directions along an axis, i.e. either from the side faced by one of the air inlets towards the side faced by the other one of the air inlets or from the side faced by the other one of the air inlets towards the side faced by the one of the air inlets.

According to an embodiment of the invention, the processing unit is adapted to determine the flow direction along the axis by determining the sign of the difference between the two pressure signals.

In other words, the sign of the pressure difference is used as an indication of the flow direction. Hence, the flow direction is determined as the direction from the air inlet having the larger pressure towards the air inlet having the lower pressure.

According to a further embodiment of the invention, the processing unit is adapted to determine the flow speed along the axis by determining the magnitude of the difference between the two pressure signals.

In other words, the magnitude of the pressure difference is used as an indication of the flow speed.

According to a further embodiment of the invention, one of the two air inlets is facing a leading edge of the rotor blade and the other one of the two air inlets is facing a trailing edge of the rotor blade.

In other words, the one of the two air inlets is facing the direction from which the air flow is expected to come under normal working conditions. Similarly, the other one of the two air inlets is facing the direction towards which the air flow is expected to travel or flow during normal operation.

Hence, if the pressure signals indicate that the air flow is directed from the trailing edge towards the leading edge, it would be considered as an indication of abnormal operation like in the case of aerodynamic stall.

According to a further embodiment of the invention, the surface module comprises two further air inlets facing opposite directions along a further axis, the sensor module comprises two further pressure sensors, one of the two further pressure sensors being in fluidic communication with one of the two further air inlets and the other one of the two further pressure sensors being in fluidic communication with the other one of the two further air inlets, the sensor module being adapted to two output two further pressure signals indicative of the pressures sensed by the two further pressure sensors, and the processing unit is adapted to determine at least one of a further flow direction and a further flow speed along the further axis based on the two further pressure signals.

In other words, the two further air inlets and the two further pressure sensors enables a determination of the direction and/or velocity of air flow along the further axis (which is preferably neither coinciding with nor parallel to the axis). Depending on the orientation of the further axis relative to the blade edges, information on flow direction and/or flow velocity along the further axis may be used to detect undesirable conditions during operation, in particular by comparing with the corresponding values along the axis.

According to a further embodiment of the invention, the axis and the further axis extend in a plane parallel to the surface of the rotor blade and with a predetermined angle between them.

In other words, the axis and the further axis extend within one plane (parallel to the blade surface) but have different orientations.

According to a further embodiment of the invention, the predetermined angle is selected from the group consisting of 15°, 30°, 45°, 60° and 90°.

In a preferred embodiment with two axes (the axis and the further axis), the predetermined angle is 90°.

However, it is explicitly noted that some embodiments may comprise a plurality of further axes, such as two, three, or even more further axes. In the case with two further axes, the predetermined angle is preferably 60° (i.e. respectively 60° and 120°). In the case with three further axes, the predetermined angle is preferably 45° (i.e. respectively 45°, 90° and 135°).

According to a further embodiment of the invention, the surface module comprises two additional air inlets facing opposite directions along the axis and being located above the two air inlets, the sensor module comprises two additional pressure sensors, one of the two further additional sensors being in fluidic communication with one of the two additional air inlets and the other one of the two additional pressure sensors being in fluidic communication with the other one of the two additional air inlets, the sensor module being adapted to output two additional pressure signals indicative of the pressures sensed by the two additional pressure sensors, and the processing unit is adapted to determine at least one of an additional flow direction and an additional flow speed based on the two additional pressure signals.

In this embodiment, the two additional air inlets are pointing in the same directions as the two air inlets, but they are arranged above the two air inlets, i.e. farther away from the blade surface than the two air inlets. Hence, the two additional air inlets provide information about the flow in a plane parallel to and above the plane of the two air inlets. The two additional air inlets and corresponding pressure sensors, in particular in conjunction with the two air inlets, provide useful information on the state of the boundary layer at the rotor blade surface.

According to a further embodiment of the invention, the sensor module and the processing unit form an integrated module adapted to be arranged within the rotor blade.

In this embodiment, the processing unit and the sensor module are arranged within a single housing which can be arranged at any suitable location within the rotor blade and connected with the air inlets of the surface module by means of suitable hosing or tubing. The information obtained by the processing unit may then be communicated to and used by a wind turbine controller.

According to a further embodiment of the invention, the sensor module is adapted to be arranged at a first location within the rotor blade, the processing unit is adapted to be arranged at a second location, and the sensor module and the processing unit are adapted for wired or wireless data communication with each other.

In this embodiment, the processing unit is separate from the sensor module. The sensor module may preferably be arranged relatively close to the surface module (e.g. directly below it) and connected to the air inlets by means of suitable hosing or tubing. The processing unit may be arranged at another location within the rotor blade or elsewhere in the wind turbine, e.g. in the nacelle or within the tower. In particular, the processing unit may be integrated in the wind turbine controller. The pressure signals are communicated from the sensor module to the processing unit through a suitable wired or wireless data connection.

According to a further embodiment of the invention, the assembly further comprises at least two chambers for collecting and draining water that enters through the two air inlets.

The chambers form a part of the fluid connections between air inlets and pressure sensors and thus prevents water, in particular rainwater, entering the air inlets from damaging or disturbing the pressure sensors.

According to a second aspect of the invention, there is provided a wind turbine comprising a rotor having a plurality of rotor blades and adapted to drive a generator arranged within a nacelle on top of a tower, the wind turbine comprising at least one assembly according to the first aspect or any one of the embodiments described above for monitoring air flow at a surface of each of the rotor blades.

This aspect of the invention utilizes the idea behind the first aspect in wind turbine by equipping each rotor blade with at least one assembly according to the first aspect.

According to a third aspect of the invention, there is provided a method of monitoring air flow at a surface of a rotor blade of a wind turbine, the method comprising (a) arranging a surface module at a predetermined location on the rotor blade surface, the surface module comprising two air inlets facing opposite directions along an axis, (b) providing a sensor module comprising two pressure sensors, wherein one of the two pressure sensors is in fluidic communication with one of the two air inlets and the other one of the two pressure sensors is in fluidic communication with the other one of the two air inlets, wherein the sensor module is adapted to output two pressure signals indicative of the pressures sensed by the two pressure sensors, and (c) determining at least one of a flow direction and a flow speed along the axis based on the two pressure signals.

This aspect of the invention is essentially based on the same idea as the first aspect described above and provides the same and similar advantages and effects in terms of a method.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a side view of an assembly according to an exemplary embodiment of the present invention.
Figure 2 shows a top view of a surface module according to an exemplary embodiment of the present invention.
Figure 3 shows an illustration of air flow at the surface of a rotor blade of a wind turbine.
Figure 4 shows a side view of an assembly according to an exemplary embodiment of the present invention.
Figure 5 shows a rotor blade of a wind turbine comprising an assembly in accordance with an exemplary embodiment of the present invention.
Figure 6 shows a side view of an assembly according to an exemplary embodiment of the present invention.

### Detailed Description

The illustration in the drawing is schematic. It is noted that in different figures, similar or identical elements are provided with the same reference numerals or with reference numerals which differ only within the first digit.

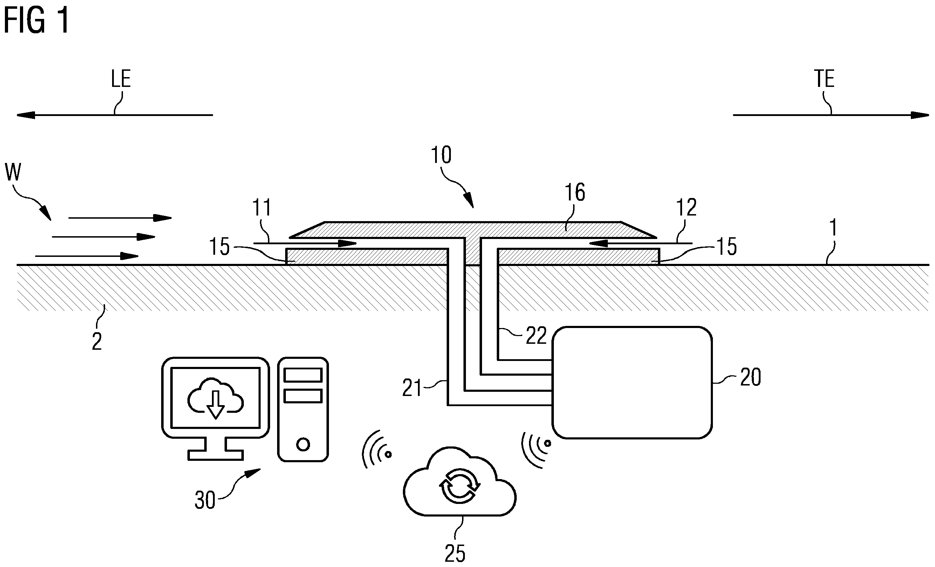

Figure 1 shows a side view of an assembly according to an exemplary embodiment of the present invention. More specifically, Figure 1 shows an assembly comprising a surface module 10, a sensor module 20, and a processing unit 30.

The surface module 10 is arranged at the surface 1 of a rotor blade 2 and comprises two air inlets 11 and 12 facing in opposite directions along an axis. More specifically, the air inlet 11 is facing in a direction towards the leading edge as indicated by arrow LE, i.e. towards the incoming wind W. The other air inlet 12 faces in the opposite direction, i.e. against the trailing edge of the rotor blade 2, as indicated by arrow TE. In the embodiment shown in Figure 1, the air inlets 11, 12 are formed as flat passageways between a lower plate 15 and an upper plate 16. The air inlet 11 is in fluid communication with the sensor module 20 through a suitable conduit 21, such as a hose or pipe. Similarly, the air inlet 12 is in fluid communication with the sensor module 20 trough conduit 22.

The sensor module 20 is arranged within the rotor blade 2 and comprises pressure sensors (not shown) arranged to measure the respective pressures at the ends of conduits 21 and 22. Two corresponding pressure signals are transmitted to the processing unit 30 by means of wireless transmission 25. In an alternative embodiment, a wired data transmission may be utilized.

The processing unit 30 may be a separate unit (e.g. part of a wind turbine controller) or it may be integrated with the sensor module 20. The processing unit 30 determines a flow direction and/or a flow speed along the axis, i.e. in the direction from the leading edge LE to the trailing edge TE, based on the received pressure signals. More specifically, the processing unit 30 determines whether the pressure difference between the two air inlets 11, 12 is positive or negative. If it is positive, i.e. if the pressure measured through air inlet 11 is higher than the pressure measured through air inlet 12, the processing unit 30 determines that the flow along the axis is directed from the leading edge LE towards the trailing edge TE. On the other hand, if the pressure difference is negative, i.e. if the pressure measured through air inlet 11 is less than the pressure measured through air inlet 12, the processing unit 30 determines that the flow along the axis is directed in the opposite direction, i.e. from the trailing edge TE towards the leading edge LE. Furthermore, the processing unit may determine the flow speed along the axis by determining the magnitude of the pressure difference. The larger the magnitude of the pressure difference is, the larger is the flow speed and vice versa.

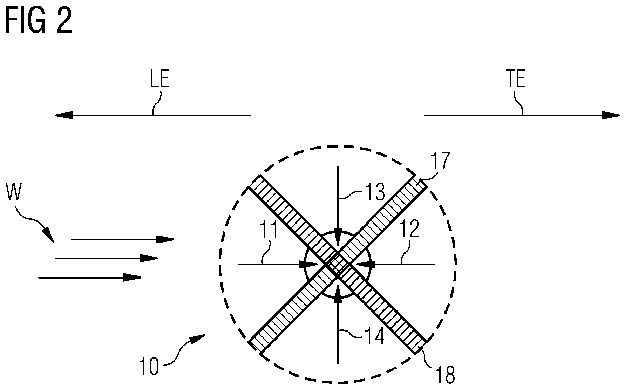

Figure 2 shows a top view of a surface module 10 according to an exemplary embodiment of the present invention. More specifically, the surface module 10 comprises the two air inlets 11, 12 already discussed above in conjunction with the embodiment shown in Figure 1 and two further air inlets 13 and 14 facing opposite directions along a further axis which is perpendicular to the axis of air inlets 11 and 12. The separation between the air inlets 11, 12, 13, 14 is provided by two walls 17 and 18 extending perpendicular to each other along respective diameters in the space between the lower plate 15 and the upper plate 16. The two further air inlets 13, 14 are in fluidic communication with respective pressure sensors (not shown) within sensor module 20 in the same or in a similar way as described above with regard to the two air inlets 11 and 12. Hence, the processing unit 30 received two further pressure signals and is capable of determining a further flow direction and/or a further flow speed along the further axis, i.e. in a direction perpendicular to the main flow direction which extends between the leading edge LE and the trailing edge TE. A significant flow in this transverse direction would be an indication of undesirable flow conditions and could be used correspondingly in the control of the wind turbine.

Under normal operating conditions, the channel facing the air stream W, i.e. the air inlet 11, will experience the greatest pressure while the channel exactly opposite to that, i.e. the air inlet 12, experiences the least pressure. Hence, the pressure difference between the two would indicate which of the air inlets 11, 12 is facing the airflow. The simplest representation of this sensor would consist of a number of pitot tubes pointing in different direction at the same height from the surface 1.

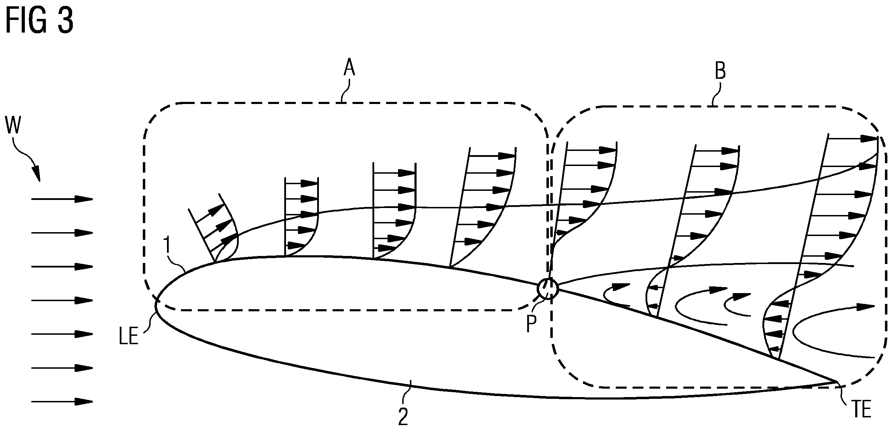

Figure 3 shows an illustration of air flow at the surface 1 of a rotor blade 2 of a wind turbine. This illustration is useful for understanding the principle behind using the flow direction as a measure of the flow quality on the rotor blade 2. Under normal conditions of attached flow, the flow along the surface 1 of the rotor blade 2 is moving towards the trailing edge TE as is the case in the front region A of the blade section shown in Figure 3. However, under some conditions, such as soiling, high shear, yaw errors, etc., the flow might separate from the blade surface 1. In this case, the flow along the surface 1 of the rotor blade 2 reverses direction and starts flowing towards the leading edge LE as can be seen on the aft part of the blade section in region B. Thus, the flow direction in point P is useful for determining the state of the boundary layer on the rotor blade 2.

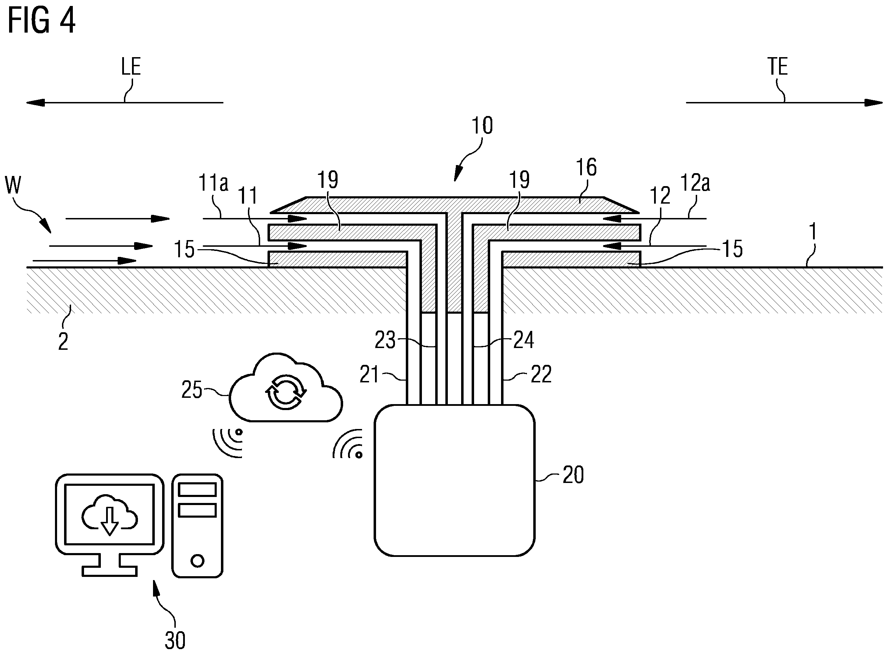

Figure 4 shows a side view of an assembly according to an exemplary embodiment of the present invention. As can be seen, this embodiment is similar to the embodiment depicted in Figure 1 but differs therefrom in that the surface module 10 comprises two additional air inlets 11a and 12a arranged above the air inlets 11 and 12, i.e. further above the blade surface 1. The additional air inlets 11a and 12a are in fluidic communication with corresponding pressure sensors (not shown) within sensor module 20 through corresponding conduits 23 and 24. In addition to the lower plate 15 and upper plate 16, the surface module comprises an intermediate plate 19 that separates the air inlets 11, 11a and 12, 12a in the vertical direction. The processing unit is hence capable of determining an additional flow direction and/or an additional flow speed along the axis (from leading edge LE towards trailing edge TE) but at a further elevated level above the surface 1 of the rotor blade 2. The knowledge on flow direction and/or flow velocity in several layers above the blade surface provides additional information on the state of the boundary layer, in particular on whether the flow is starting to separate or has completely separated.

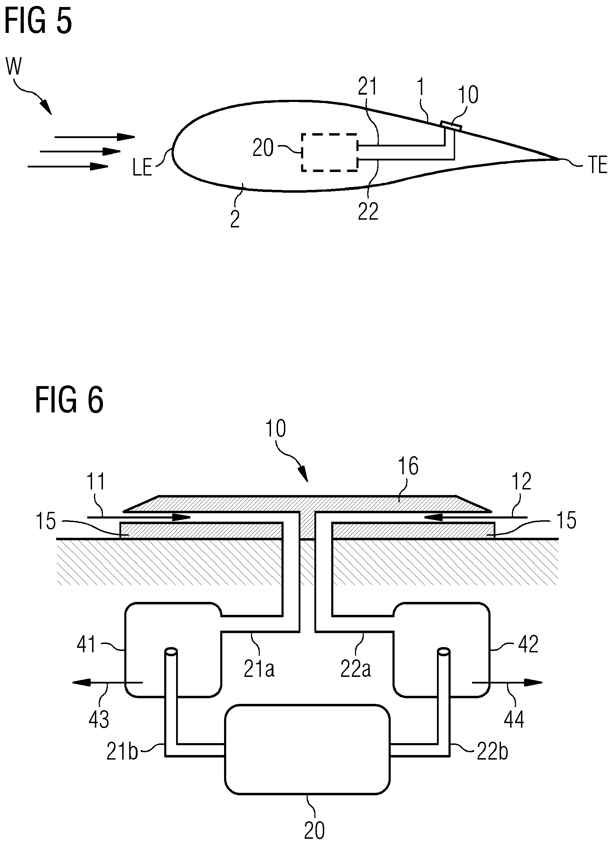

Figure 5 shows a rotor blade 2 of a wind turbine comprising an assembly in accordance with an exemplary embodiment of the present invention. As shown, the surface module 10 is arranged at the surface 1 of the rotor blade and in fluidic (or electric) communication with the sensor module 20 through conduits (or wires) 21 and 22. The sensor module 20 is located within the rotor blade 2 and may communicate with the processing unit 30 (not shown) utilizing wireless or wired data transmission.

Figure 6 shows a side view of an assembly according to an exemplary embodiment of the present invention. This embodiment is a variation of the embodiment shown in Figure 1 and discussed above. More specifically, the conduits providing fluidic communication between the air inlets 11, 12 of the surface module 10 and the sensor module 20 extend through respective chambers 41 and 42 that serve to collect and drain water entering through the air inlets 11 and 12. As shown, the fluidic communication between air inlet 11 and the sensor module 20 is provided by a pair of conduits 21a and 21b and the chamber 41, while the fluidic communication between air inlet 12 and the sensor module 20 is provided by another pair of conduits 22a and 22b and the chamber 42. The tube 21a extends from air inlet 11 into an upper part of chamber 41 while the tube 21b has an open end that is within the chamber 41 at an elevated position above the bottom of the chamber 41 and continues to the sensor module 20. Similarly, the tube 22a extends from air inlet 12 into an upper part of chamber 42 while the tube 22b has an open end that is within the chamber 42 at an elevated position above the bottom of the chamber 42 and continues to the sensor module 20. The chamber 41 has a drain 43 through which water is removed (by a pump or by means of gravity or centrifugal forces). Similarly, the chamber 42 has a drain 44 for removing water. The chambers 41 and 42 assures that water getting in through the air inlets 11 and 12 cannot reach the pressure sensors within the sensor module 20.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. An assembly for monitoring air flow at a surface (1) of a rotor blade (2) of a wind turbine, the assembly comprising
a surface module (10) adapted to be arranged at a predetermined location on the rotor blade surface (1), the surface module comprising two air inlets (11, 12) facing opposite directions along an axis,
a sensor module (20) comprising two pressure sensors, wherein one of the two pressure sensors is in fluidic communication with one of the two air inlets and the other one of the two pressure sensors is in fluidic communication with the other one of the two air inlets, wherein the sensor module is adapted to output two pressure signals indicative of the pressures sensed by the two pressure sensors, and
a processing unit (30) adapted to determine at least one of a flow direction and a flow speed along the axis based on the two pressure signals.

2. The assembly according to the preceding claim, wherein the processing unit is adapted to determine the flow direction along the axis by determining the sign of the difference between the two pressure signals.

3. The assembly according to any one of the preceding claims, wherein the processing unit is adapted to determine the flow speed along the axis by determining the magnitude of the difference between the two pressure signals.

4. The assembly according to any one of the preceding claims, wherein one of the two air inlets is facing a leading edge (LE) of the rotor blade and the other one of the two air inlets is facing a trailing edge (TE) of the rotor blade.

5. The assembly according to any one of the preceding claims, wherein
the surface module comprises two further air inlets facing opposite directions along a further axis,
the sensor module comprises two further pressure sensors, one of the two further pressure sensors being in fluidic communication with one of the two further air inlets and the other one of the two further pressure sensors being in fluidic communication with the other one of the two further air inlets, the sensor module being adapted to two output two further pressure signals indicative of the pressures sensed by the two further pressure sensors, and
the processing unit is adapted to determine at least one of a further flow direction and a further flow speed along the further axis based on the two further pressure signals.

6. The assembly according to the preceding claim, wherein the axis and the further axis extend in a plane parallel to the surface of the rotor blade and with a predetermined angle between them.

7. The assembly according to the preceding claim, wherein the predetermined angle is selected from the group consisting of 15°, 30°, 45°, 60° and 90°.

8. The assembly according to any one of the preceding claims, wherein
the surface module comprises two additional air inlets facing opposite directions along the axis and being located above the two air inlets,
the sensor module comprises two additional pressure sensors, one of the two further additional sensors being in fluidic communication with one of the two additional air inlets and the other one of the two additional pressure sensors being in fluidic communication with the other one of the two additional air inlets, the sensor module being adapted to output two additional pressure signals indicative of the pressures sensed by the two additional pressure sensors, and
the processing unit is adapted to determine at least one of an additional flow direction and an additional flow speed based on the two additional pressure signals.

9. The assembly according to any one of the preceding claims, wherein the sensor module and the processing unit form an integrated module adapted to be arranged within the rotor blade.

10. The assembly according to any one of the preceding claims, wherein the sensor module is adapted to be arranged at a first location within the rotor blade, wherein the processing unit is adapted to be arranged at a second location, and wherein the sensor module and the processing unit are adapted for wired or wireless data communication with each other.

11. The assembly according to any one of the preceding claims, further comprising at least two chambers for collecting and draining water that enters through the two air inlets.

12. A wind turbine comprising a rotor having a plurality of rotor blades and adapted to drive a generator arranged within a nacelle on top of a tower, the wind turbine comprising at least one assembly according to any one of the preceding claims for monitoring air flow at a surface of each of the rotor blades.

13. A method of monitoring air flow at a surface of a rotor blade of a wind turbine, the method comprising
arranging a surface module at a predetermined location on the rotor blade surface, the surface module comprising two air inlets facing opposite directions along an axis,
providing a sensor module comprising two pressure sensors, wherein one of the two pressure sensors is in fluidic communication with one of the two air inlets and the other one of the two pressure sensors is in fluidic communication with the other one of the two air inlets, wherein the sensor module is adapted to output two pressure signals indicative of the pressures sensed by the two pressure sensors, and
determining at least one of a flow direction and a flow speed along the axis based on the two pressure signals.
